# EUROPÄISCHE PATENTSCHRIFT

(11) **EP 0 907 032 B1**
(45) Veröffentlichungstag und Bekanntmachung des Hinweises auf die Patenterteilung: **26.06.2002**
(21) Anmeldenummer: 98118954.1
(22) Anmeldetag: 07.10.1998
(51) Int. Cl.: F16B 7/04, F16B 37/04, F16B 37/02

(54) **Halteelement**
Holding element
Elément de fixation

(30) Priorität: 30.10.1997 DE 19747887; 06.11.1997 DE 19749040
(43) Veröffentlichungstag der Anmeldung: 07.04.1999
(73) Patentinhaber: FRIATEC AG, 68229 Mannheim (DE)
(72) Erfinder: Schweigert, Adolf, 88682 Salem (DE); Krzempek, Gregor, 68723 Oftersheim (DE); Warkus, Clemens, 68723 Oftersheim (DE)
(74) Vertreter: Schmitt, Meinrad, Dipl.-Ing.

(56) Entgegenhaltungen:
- EP-A- 0 322 267
- EP-A- 0 588 467
- DE-A- 4 406 208
- GB-A- 1 229 668
- US-A- 4 300 865

## Beschreibung

Die Erfindung bezieht auf ein Halteelement gemäß der im Oberbegriff des Patentanspruchs 1 angegebenen Merkmale.

Aus der DE-A-44 06 208 ist ein derartiges Haltelement mit Haltekrallen bekannt, welche mit Längsnuten einer Profilschiene zur Herstellung einer kraft- und/oder formschlüssigen Verbindung in Eingriff bringbar sind. Das Haltelement enthält ein Gehäuse, welches zur Verbindung mit einem weiteren Profil in dessen Hohlkammer einsetzbar ist. Zur Verbindung mit anderen Bauteilen, wie Anschlußwinkeln, Stützelementen oder dergleichen, ist dieses Halteelement nicht ohne weiteres geeignet.

Ferner ist aus der US-A-4 300 865 ein Haltelement bekannt, welches ein Mittelteil und an diesem angeordnete Haltekrallen aufweist. Das Halteteil ist teilweise in eine Bohrung eines Bauteils einsetzbar und enthält Haltekrallen, welche auf einer Unterseite des Bauteils angreifen. An der Oberseite des Bauteils ist ein Profil mit einer Bohrung vorgesehen, durch welche ein als Schraube ausgebildetes Befestigungselement durchgreift. Das Befestigungselement ist ferner in ein Verbindungselement des Halteelements einschraubbar, wobei durch Anziehen des Befestigungselements das Bauteil und das Profil gegeneinander verspannt werden. Sowohl das Profil als auch das Bauteil müssen die genannten Bohrungen aufweisen, wodurch eine bestimmte gegenseitige Positionierung vorgegeben und eine gegenseitige Ausrichtung entsprechend variablen Einbaubedingungen nicht ohne weiteres durchführbar ist. Die Einbringung der Bohrungen sowohl in das Profil als auch in das mit diesem zu verbindende Bauteil erfordert einen zusätzlichen Montageaufwand. Die Verbindung des Bauteils mit einer Profilschiene, welche an Längskanten hinterschnittene Längsnuten aufweist, ist nicht ohne weiteres möglich.

Des weiteren ist aus der EP-A-0 322 267 ein Halteelement bekannt, welches aus zwei im wesentlichen U-förmig ausgebildeten Teilen besteht. Der erste Teil enthält in Schenkeln Durchbrechungen, in welche federnde Haltekrallen des zweiten Teils eingreifen. Das Halteelement ist innen in einem U-förmigen Träger eingesetzt, wobei die Schenkel des ersten Teils mittels der genannten Haltekrallen des zweiten Teils gegen die Innenfläche des U-förmigen Trägers verspannt sind. Der U-förmige Träger sowie beide Teile des Halteelements weisen miteinander fluchtende Bohrungen auf, für eine Schraube zur Verbindung mit einem Bauteil, wobei die Schraube in ein mit dem innenliegenden zweiten Teil verbundenen Innengewinde verschraubbar ist. Eine Verbindung mit einer Profilschiene, welche im Bereich ihrer Längskanten hinterschnittene Längsnuten aufweist, ist mit diesem Halteelement nicht ohne weiteres herstellbar.

Hiervon ausgehend liegt der Erfindung die Aufgabe zugrunde, mit geringem konstruktiven Aufwand das Halteelement dahingehend auszubilden, daß eine funktionssichere Verbindung des Bauteils mit dem Profil ermöglicht wird, welches als eine Profilschiene mit hinterschnittenen Längsnuten an den Längskanten ausgebildet ist. Das Halteelement soll einen geringen Fertigungsaufwand erfordern und eine sichere und dauerhafte Verbindung mit der Profilschiene sicher stellen. Die Handhabung bei der Montage soll vereinfacht und die Montagezeit soll auf ein Minimum reduziert werden.

Die Lösung dieser Aufgabe erfolgt gemäß den im Patentanspruch 1 angegebenen Merkmalen.

Das erfindungsgemäße Halteelement ist als eine Klammer aus Blech, insbesondere Federstahl, ausgebildet und besitzt an ihren beiden Längskanten die beiden abgewinkelten Haltekrallen, welche zum Eingriff in die Längsnuten des Profils oder der Profilschiene vorgesehen sind. Das Halteelement enthält ein Verbindungselement, welches zusammen mit einem Befestigungskörper zur Verbindung mit einem Bauteil vorgesehen ist. Der Befestigungskörper ist zweckmäßig als ein Bolzen ausgebildet, welcher Schrägflächen, Gewindeflächen, Stifte, Nocken oder dergleichen aufweist, welche mit korrespondierenden Flächen, Nuten oder dergleichen des Halteelements und insbesondere dessen Hülse oder Ansatz in Eingriff bringbar sind. So kann der Befestigungskörper als Schraube ausgebildet sein, welche in ein Gewinde der Hülse oder des Ansatzes des Halteelements eingreift. Des weiteren kann die Verbindung auch nach Art eines Bajonettverschlusses derart ausgebildet sein, daß der Bolzen radiale Stifte oder Nocken aufweist, welche in korrespondierende Nuten oder Schlitze des Halteelements, insbesondere dessen Hülse oder Ansatz eingreifen. Wesentlich ist für alle Ausführungsformen, daß mittels des Verbindungselements eine axiale Spannkraft derart ausgeübt wird, daß die Haltekrallen gepresst und festgespannt werden. Zweckmäßig im Zentrum des Halteelements ist das Verbindungselement für den Befestigungskörper bzw. Bolzen vorgesehen, mittels welchem die Verbindung des Bauteils erfolgt. So ist beispielsweise das Gewinde im Mittelteil des Halteelements, bevorzugt in der Hülse oder dem ringförmigen Ansatz, vorgesehen, welcher eine vorgegebene Höhe aufweist. Das Verbindungselement, insbesondere die Hülse oder der Ansatz mit dem Gewinde, welches als Innengewinde entsprechend dem Außengewinde der genannten Schraube ausgebildet ist, ist auf der Außenseite angeordnet, während die Haltekrallen zur gegenüberliegenden Innenseite des Halteelements gerichtet und abgewinkelt sind. Durch die Integration des Verbindungselements in das Halteelement wird die Verwendung einer Mutter zur Herstellung der Verbindung mit der Schraube überflüssig. Insoweit wird die Herstellung der Verbindung bzw. die Montage erleichtert. Ferner wird der zulässige Abstand zwischen Profil und dem Bauteil reduziert, da kein Freiraum für eine Mutter vorgesehen werden muß. Nach dem Aufsetzen oder Aufclipsen des Halteelements auf die Profilschiene kann das Halteelement in Richtung der Längsachse der Profilschiene entlang dessen Oberfläche verschoben und in der notwendigen Weise ausgerichtet werden. Nachfolgend wird mittels der Befestigungskörper die feste Verbindung mit dem Bauteil hergestellt, wobei vor dem endgültigen Festziehen des Befestigungskörpers noch eine exakte Justierung durchführbar ist.

Der Befestigungskörper kann anstelle der erwähnten Schraube im Rahmen der Erfindung als Bolzen mit einem radialen Stift oder Nocken ausgebildet sein, mit welchem das Verbindungselement des Halteelements korrespondiert, wobei das Verbindungselement insbesondere als eine Bajonetthülse ausgebildet ist. So kann das Verbindungselement bzw. die Bajonetthülse einen im Prinzip L-förmigen Schlitz aufweisen mit einem Längsteil und einem Querteil. Bei dieser Ausführungsform wird zur Herstellung der Verbindung mit dem Bauteil der Befestigungskörper in das Verbindungselement bzw. die Hülse des Halteelements derart eingeführt, daß der radiale Stift oder Nocken zuerst in den Schlitz-Längsteil eingreift und dann nach entsprechender Drehung des Bolzens in den Querteil einrastet, wobei gleichzeitig auch eine axiale Längskraft zum erfindungsgemäßen axialen Verspannen des Halteelements insbesondere durch entsprechende Neigung des Querteils erreicht wird. Durch das axiale Festspannen des Halteelements werden erfindungsgemäß dessen Haltekrallen in die Längsnuten des Profils eingepresst und unter Vorspannung zur Fixierung auf der Profilschiene gehalten.

Das mit dem Halteelement mittels der genannten Schraube verbindbare Bauteil enthält eine Ausnehmung, durch welche die Schraube hindurchgreift. Die Breite oder der Durchmesser dieser Ausnehmung ist erfindungsgemäß größer als der Außendurchmesser des Ansatzes, welcher somit in diese Ausnehmung eingreifen kann. Desweiteren ist die Breite bzw. der Durchmesser derart groß vorgegeben, daß beim Festziehen der Schraube erfindungsgemäß die Verspannung durch Vergrößerung des Abstandes der freien Enden der Haltekrallen bezüglich des Mittelteils und/oder durch verstärktes, gegeneinander gerichtetets seitliches Einpressen der einander gegenüberliegenden Haltekrallen in die beiden Längsnuten der Profilschiene bewirkt wird.

In einer besonderen Ausgestaltung enthält das Halteelement ferner wenigstens zwei diametral angeordnete Zungen, welche gleichfalls zur Innenseite abgewinkelt angeordnet sind und welche insbesondere zur Zentrierung auf der Profilschiene dienen. Die Zungen übergreifen in zweckmäßiger Weise die parallelen Außenkanten derjenigen Profiloberfläche, an welche zu beiden Seiten die Längsnuten und die darin eingreifenden Haltekrallen des Halteelements sich befinden. Die Zungen, und zwar vor allem deren Neigungswinkel, sowie die Haltekrallen, und zwar insbesondere deren freie Enden, sind derart aufeinander abgestimmt, daß nach dem Aufsetzen oder Aufclipsen des Halteelements auf die Profilschiene das Halteelement bezüglich der Profilschiene zentriert ist und/oder daß die Längsebene des Halteelements im wesentlichen orthogonal zur Oberfläche der Profilschiene steht. Ansonsten besteht die Gefahr, daß bei einem schiefen Aufsitzen des Halteelements die Haltekrallen in eine der Längsnuten nur am Rande oder unvollständig eingreifen, wodurch die Fixierung auf der Profilschiene unter Umständen in Frage gestellt wäre. Aufgrund der wenigstens zwei, bezüglich der Längsebene diametral angeordneten Zungen werden Fertigungstoleranzen ausgeglichen und der Fertigungsaufwand auch für die Profilschiene im Hinblick auf Einhaltung von Toleranzen auf ein Minimum reduziert. Die Zungen gelangen beim Verbinden mit dem Profil an den Außenkanten der Oberfläche zur Anlage, während die Haltekrallen in die seitlichen Längsnuten des Profils eingreifen. Zungen und Haltekrallen sind derart aufeinander abgestimmt, daß eine hinreichende Fixierung des Halteelements bezüglich des Profils erreicht ist. Zweckmäßig sind insgesamt vier Zungen paarweise an den beiden Enden des Halteelements angeordnet.

In einer anderen Ausgestaltung enthält das Halteelement Distanzelemente, welche einen definierbaren Abstand des Halteelements und insbesondere dessen Mitteilteil zur gegenüberliegenden Oberfläche des zu verbindenden Bauteils vorgeben. Diese Distanzelemente können in zweckmäßiger Weise als abgewinkelte Teile, insbesondere in Form von Krallen ausgebildet sein, welche ebenso wie der Gewindeansatz vom Mittelteil in der gleichen Richtung entgegengesetzt zu den Haltekrallen abstehen. Es sind bevorzugt wenigstens zwei, bezüglich der Längsebene des Halteelements diametrale Distanzelemente vorgesehen. Die Distanzelemente sind in zweckmäßiger Weise durch Ausstanzen und Abwinkeln von vorgegebenen Teilen des Halteelements hergestellt und ebenso wie die bereits erwähnten Zungen einteilig mit dem Halteelement ausgebildet. Die Distanzelemente liegen zweckmäßig mit Spitzen- oder Endbereichen an der zugeordneten Oberfläche des Bauteils an, wobei eine hohe Flächenpressung und/oder funktionssichere Fixierung gewährleistet ist.

Besondere Ausgestaltungen und Weiterbildungen der Erfindung sind in den Unteransprüchen sowie der folgenden Beschreibung eines besonderen Ausführungsbeispiels angegeben. Auch wenn nachfolgend aus Gründen der Klarheit die spezielle Ausbildung des Verbindungselements als Ansatz mit Innengewinde und der korrespondierende Befestigungskörper in Form einer Schraube erläutert werden, so erfolgt hierdurch keine Beschränkung der Erfindung.

Die Erfindung wird nachfolgend anhand von Ausführungsbeispielen näher erläutert. Es zeigen:
- Fig. 1: teilweise als Ansicht und teilweise geschnitten das Halteelement,
- Fig. 2: eine Aufsicht in Richtung des Pfeiles 11 gemäß Fig. 1,
- Fig. 3: eine perspektivische Ansicht eines modifizierten Halteelements,
- Fig. 4: eine Ansicht des Halteelements mit einem Bauteil in Form eines Anschlußwinkels.

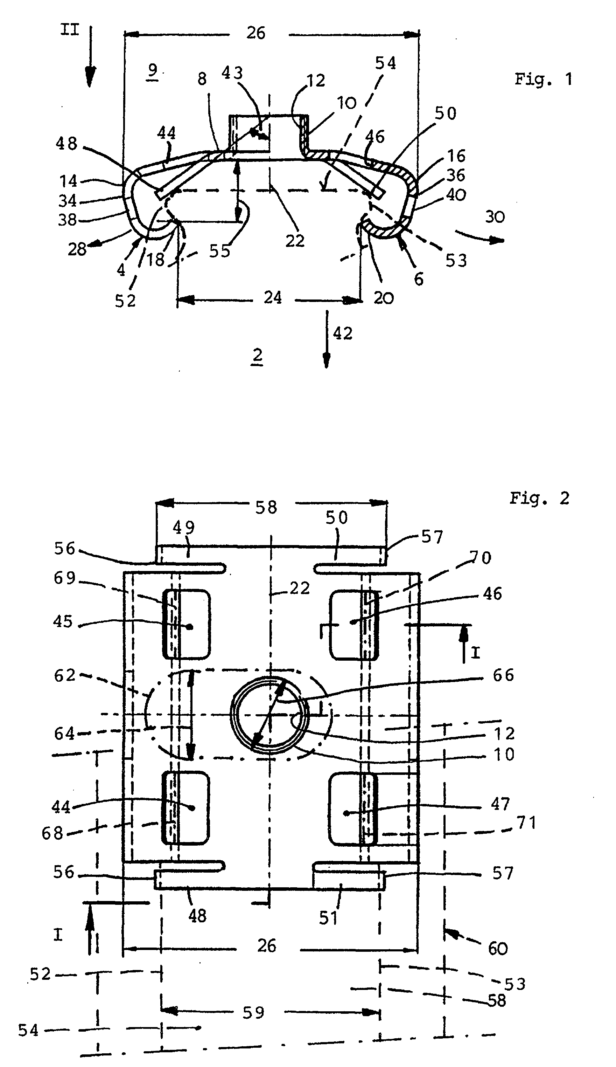

Fig. 1 zeigt das einstückig aus Blech, und zwar aus Federstahl, gefertigte Halteelement mit den beiden zur Innenseite 2 abgewinkelten Haltekrallen 4, 6, zwischen welchen ein Mittelteil 8 liegt. Auf der zur Innenseite 2 gegenüberliegenden Außenseite 9 ist ein Verbindungselement in Form eines ringförmigen Ansatzes 10 mit einem Innengewinde 12 für eine hier nicht weiter dargestellte Schraube vorgesehen. Das Innengewinde 12 ist durch Rollen hergestellt.

Die beiden an den Längskanten 14, 16 des Halteelements zur Innenseite 2 C-artig abgewinkelten Haltekrallen 14, 16 sind entsprechend der Kontur des Profils sowie dessen Längsnuten ausgebildet und ragen mit ihren gebogenen freien Enden 18, 20 nach innen zur Längsebene 22. Die freien Enden 18, 20 weisen einen Abstand 24 zueinander auf, welcher wesentlich kleiner ist als der Abstand 26 der Längskanten 14, 16. Die Haltekrallen 4, 6 sind erfindungsgemäß derart ausgebildet, daß die zur Längsebene 22 abgewinkelten freien Enden 18, 20 in die hinterschnittenen Längsnuten des genannten Profils eingreifen. Wesentlich ist hierbei, daß der Abstand 24 der freien Enden 18, 20 kleiner ist als die Breite der Oberfläche des zugeordneten Profils.

Beim Verbinden werden die freien Enden 18, 20 in Richtung der Pfeile 28, 30 aufgespreizt, um dann in die hinterschnittenen Längsnuten des Profils einzurasten. Hierdurch ist eine vorläufige Positionierung des Halteelements bezüglich des Profils bzw. umgekehrt erreicht, wobei nachfolgend eine exakte Ausrichtung und Positionierung durch gegenseitiges Verschieben ermöglicht ist. Die Handhabung bei der Montage wird hierdurch nicht unwesentlich erleichtert.

Die Haltekrallen 4, 6 enthalten ferner in den nach unten gerichteten mittleren Stegen 34, 36 Durchbrechungen 38, 40. In diese Durchbrechungen kann bei Bedarf ein Werkzeug, wie ein Schraubendreher, eingesetzt werden, um das Halteelement nach dem Aufsetzen oder Aufclipsen in Richtung des Pfeiles 42 auf das Profil von diesem wieder lösen zu können.

In einer besonderen Weiterbildung weist das Halteelement im Ansatzbereich der Haltekrallen 4, 6 an das Mittelteil 8 Materialreduzierungen oder Durchbrechungen 44, 46 auf. Diese Durchbrechungen 44, 46 liegen zweckmäßig symmetrisch zu beiden Seiten der Längsebene 22 und bewirken in diesem Bereich eine Reduzierung der Federsteifigkeit. Infolge der derart vorgegebenen Reduzierung der Steifigkeit wird das Aufspreizen der Haltekrallen 4, 6 beim Aufsetzen auf das Profil erleichtert.

Ferner enthält das Haltelelement wenigstens zwei, bezüglich der Längsebene 22 diametral liegende und zur Innenseite 2 gerichtete bzw. abgewinkelte Zungen 48, 50. Diese Zungen liegen nach dem Aufclipsen des Halteelements an den gestrichelt angedeuteten Längskanten 52, 53 der Oberfläche 54 des Profils in zweckmäßiger Weise federnd an. Somit wird nach dem Aufclipsen eine Zentrierung des Halteelements auf der Profilschiene sichergestellt. Durch das Zentrieren steht die Längsebene 22 des Halteelements im wesentlichen orthogonal zur Oberfläche 54. Desweiteren wird mittels der diametral angeordneten Zungen eine achsparallele Ausrichtung des Halteelements bezüglich des Profils derart erreicht, daß die Längsachse des Profils zumindest näherungsweise in der Längsebene 22 liegt. Schließlich ist aufgrund der Zungen eine vorläufige Fixierung des Halteelements bezüglich des Profils gewährleistet, doch kann mit geringem vorgegebenen Kraftaufwand das Halteelement entlang der Oberfläche des Profils verschoben und exakt positioniert werden. Nach dem Aufclipsen des Halteelements auf die Profilschiene wird durch Festziehen der genannten Schraube in dem Innengewinde 12 der Abstand 55 zwischen den freien Enden 18, 20 der Haltekrallen und dem Mittelteil 8 vergrößert und das Festspannen des Halteelements auf der Profilschiene erreicht. Beim Festziehen der Schraube werden die Haltekrallen 4, 6, und zwar insbesondere deren freien Enden 18, 20, mit zunehmender Kraft seitlich im wesentlichen entgegen der Richtung der Pfeile 28, 80 in die Längsnuten der Profilschiene eingepreßt. Die Zungen 48 bis 51 sind zur Längsebene 22 in einem Winkel 43 geneigt angeordnet, welcher wesentlich kleiner als 90° ist und dessen Spitze auf der Außenseite 9 liegt. Der Winkel 43 liegt bevorzugt zwischen 30° und 60°, insbesondere zwischen 40° und 50°.

Fig. 2 zeigt eine Aufsicht von oben auf das Halteelement, wobei nunmehr der zentral in der Mitte der Längserstreckung ebenso wie der Breitenerstreckung des Halteelements angeordnete Ansatz 10 mit dem gerollten Innengewinde 12 gut zu erkennen ist. Ein Schnitt entlang Schnittlinie I ergibt Fig. 1. Desweiteren sind die insgesamt vier Durchbrechungen 44 bis 47, welche symmetrisch zu beiden Seiten der Längsebene 22 vorgesehen sind, gut zu erkennen. An den beiden Enden des Halteelements sind ferner jeweils zwei der genannten Zungen 48 bis 51 diametral vorgesehen, welche symmetrisch zu beiden Seiten bezüglich der Längsebene 22 angeordnet sind. Die freien Enden 56, 57 der an den gleichen Enden gegenüberliegend angeordneten Zungen 48, 51 sowie 49, 50 besitzen einen Abstand 58. Dieser Abstand 58 ist größer, als die Breite 59 der Oberfläche 54 zwischen den Längskanten 52, 53 des Profils 60. Wie bereits ausgeführt, ist hingegen der Abstand zwischen den freien Enden der Haltekrallen kleiner als die Breite 59 der Profiloberfläche 54.

Mit strichpunktierter Linie ist eine Durchbrechung 62 eines Bauteils angedeutet, welches mit dem Halteelement mittels der genannten Schraube verbindbar ist. Diese Durchbrechung 62 ist beispielshaft als Langloch ausgebildet und besitzt erfindungsgemäß eine Breite 64, welche größer ist als der Außendurchmesser 66 des Ansatzes 10. Somit werden beim Festziehen der Schraube der Ansatz 10 und das Mittelteil 8 relativ zu den Haltekrallen, und zwar insbesondere deren freien Enden 18, 20, bewegt, so daß diese in der erforderlichen Weise in die Längsnuten der Profilschiene einschwenken und eingepreßt werden.

In einer alternativen Ausgestaltung besitzt das Halteelement Distanzelemente 68 bis 71, welche ebenso wie der Ansatz 10 vom Halteelement in Richtung vor die Zeichenebene abstehen. Im Rahmen der Erfindung sind wenigstens zwei bezüglich der Längsebene 22 diametral angeordnete stegförmige Distanzelemente 68 bis 71 vorgesehen. Die vor der Zeichenebene liegenden Enden oder Spitzen dieser Distanzelemente gelangen an der Oberfläche des genannten Bauteils zur Anlage. Beim Festziehen der Schraube wird mittels der erfindungsgemäß stegförmigen Distanzelemente, welche bevorzugt Spitzen oder Zähne aufweisen, eine Drehsicherung gewährleistet. Da die Distanzelemente 68 bis 71 einen vorgegebenen Abstand zum Ansatz 10 aufweisen, erfolgt beim Festziehen der genannten Schraube die erwünschte Relativbewegung des Mittelteils 8 einerseits und der Haltekrallen andererseits, wobei über die Haltekrallen gegeneinander zur Längsebene 22 gerichtete Kraftkomponenten zum Festspannen der Profilschiene wirksam sind. In bevorzugter Weise sind vier Distanzelemente 68 bis 71 vorgesehen, wobei jeweils zwei Distanzelemente 68, 71 bzw. 69, 70 paarweise einander gegenüberliegen. Die Distanzelemente 68 bis 71 sind in zweckmäßiger Weise als abgewinkelte Teile an den Außenkanten der Durchbrechungen 44 bis 47 ausgebildet. Die Durchbrechungen 44 bis 47 werden durch Ausstanzen hergestellt, wobei jedoch an den Außenkanten keine Abtrennung erfolgt und durch Abwinkeln des inneren ausgestanzten Teils der Durchbrechungen nachfolgend die stegförmigen Distanzelemente 68 bis 71 hergestellt werden. Bevorzugt sind die Distanzelemente 68 bis 71 im wesentlichen parallel zur Längsebene 22 angeordnet.

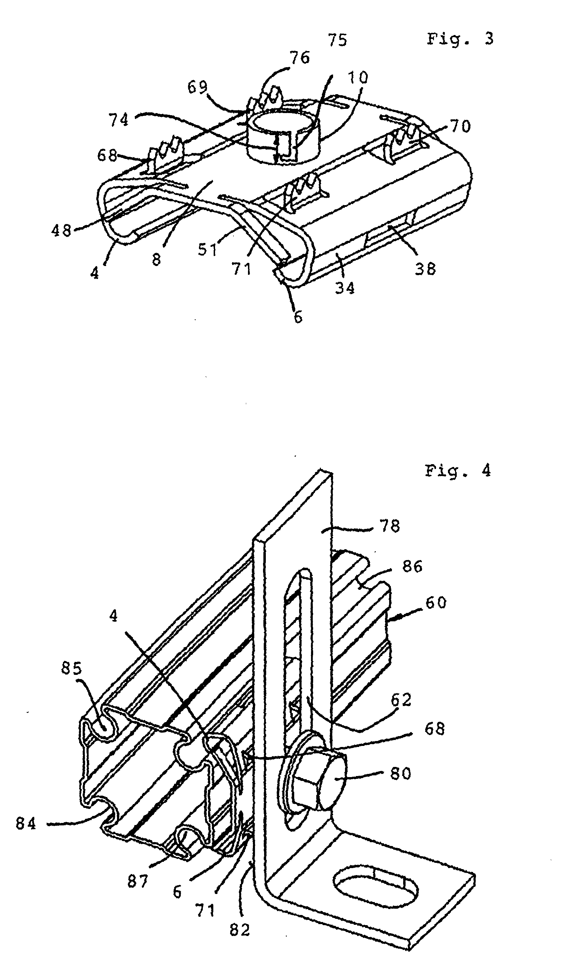

Fig. 3 zeigt eine perspektivische Ansicht der besonderen Ausbildung des Halteelements mit den vier abgewinkelten stegförmigen Distanzelementen 68 bis 71, wobei die Durchbrechung 38 im mittleren Steg 34 der Haltekralle 4 zu erkennen ist. Desweiteren zeigt diese Ansicht gut die nach unten bzw. innen abgewinkelten Federzungen 48, 51. Der Ansatz 10 steht mit der Höhe 74 über das Mittelteil 8 vor. Die Höhe 74 ist in Abhängigkeit vom Durchmesser des Ansatzes 10 vorgegeben, welcher integraler Bestandteil des aus einem einzigen Stück bestehenden Halteelements ist.

Die Distanzelemente 68 bis 71 stehen vom Mittelteil 8 des Halteelements in der gleichen Richtung wie der Ansatz 10 ab und liegen an der dem Profil zugewandten Oberfläche des erwähnten Bauteils an. Die Distanzelemente 68 bis 71 weisen jeweils wenigstens einen Zahn oder eine Spitze 76 auf, welche in Eingriff mit der Oberfläche des Bauteils gebracht wird und nach dem Festziehen der genannten Schraube eine definierte Ausrichtung des Bauteils bezüglich des Halteelements letztendlich der Profilschiene sicherstellt. Die Distanzelemente 68 bis 71 enthalten bevorzugt mehrere, insbesondere drei derartige Zähne oder Spitzen 76, um bei der Montage eine Drehsicherung und eine sichere Fixierung zu gewährleisten und um Relativbewegungen des Halteelements sowie der Profilschiene bezüglich des Bauteils für eine lange Lebensdauer auszuschließen. Die Zähne oder Spitzen 76 führen aufgrund der hohen Flächenpressung zu Formänderungen der Oberfläche, mit der Folge einer stabilen formschlüssigen Verbindung.

Eine besondere alternative Ausgestaltung soll an Hand von Fig. 3 weiter erläutert werden. Das als zylindrische Hülse ausgebildete Verbindungselement 10 enthält einen L-artigen Schlitz 75 nach Art eines Bajonettverschlusses. Der Schlitz 75 enthält einen achsparallelen Längsteil, durch welchen von oben her ein radialer Stift oder Nocken des als Bolzen ausgebildeten Befestigungselements einführbar ist. Ist das Befestigungselement bzw. der erwähnte Bolzen soweit eingeführt, daß dessen Stift den querliegenden Teil erreicht hat, so wird der Bolzen zur Herstellung der Bajonettverbindung derart gedreht, daß der Nocken oder Stift im Querteil des Schlitzes 75 arretiert wird. Der genannte Querteil kann zweckmäßig auch derart geneigt angeordnet sein, daß eine axiale Verspannung des Halteelements erreicht wird und die Haltekrallen 4, 6 verstärkt in die zugeordneten seitlichen Längsnuten des Profils gepresst und / oder eingespannt werden. Der genannte Bolzen kann bedarfsweise gemäß Zeichnung am oberen Ende auch ein Gewinde für eine Mutter aufweisen, um so das Bauteil mit dem Halteelement zu verbinden, wobei in zweckmäßiger Weise über die Schrägflächen bzw. Gewindeflächen des Bolzens und der korrespondierenden Mutter die axiale Verspannung erreicht wird.

Schließlich zeigt Fig. 4 das Halteelement zur Verbindung des Profils oder der Profilschiene 60 mit dem Bauteil 78, welches hier als Anschlußwinkel des Profils 60 an eine Wand oder Boden ausgebildet ist. Das Bauteil 78 enthält die Durchbrechung 62, welche als Bohrung ebenso wie als Längsschlitz ausgebildet sein kann. Durch die Durchbrechung 62 greift die Schraube 80, welche in das erläuterte Innengewinde des Halteelements eingeschraubt ist. Die vom Halteelement abstehenden Distanzelemente 68, 71 liegen an der Oberfläche 82 des Bauteils 78 an. Die Profilschiene 60 enthält in ihren vier Eckbereichen jeweils eine Längsnut 84 bis 87. Das Halteelement greift mit den Haltekrallen 4, 6 in die beiden benachbarten Längsnuten 86, 87 ein und ist in der erläuterten Weise auf der Profilschiene 60 festgespannt.

### Bezugszeichen

- 2: Innenseite
- 4, 6: Haltekralle
- 8: Mittelteil
- 9: Außenseite
- 10: Verbindungselement / Ansatz
- 12: Innengewinde
- 14, 16: Längskante
- 18, 20: freies Ende von 4, 6
- 22: Längsebene
- 24: Abstand zwischen 18 und 20
- 26: Abstand zwischen 14 und 16
- 28, 30: Pfeil
- 34, 36: mittlerer Steg von 4, 6
- 38, 40: Reduzierung / Durchbrechung in 34, 36
- 42: Pfeil
- 43: Winkel
- 44 - 47: Reduzierng / Durchbrechung in 8
- 48 - 51: Zunge
- 52, 53: Längskanten
- 54: Oberfläche
- 55: Abstand zwischen 18, 20 und 8
- 56, 57: freies Ende von 48, 51
- 58: Abstand zwischen 56 und 57
- 59: Breite zwischen 52 und 53
- 60: Profischiene / Profil
- 62: Durchbrechung
- 64: Breite von 62
- 66: Außendurchmesser von 10
- 68 - 71: Distanzelement
- 74: Höhe von 10
- 75: Schlitz
- 76: Spitze
- 78: Bauteil
- 80: Schraube / Befestigungselement
- 82: Oberfläche
- 84 - 87: Längsnuten von 60

## Patentansprüche

1. Halteelement, enthaltend ein Mittelteil (8) und an diesen angeordnete Haltekrallen (4, 6), sowie ein Verbindungselement (10, 12) zur Verbindung eines Bauteils (78) mit einem Profil (60), welches als eine Profilschiene mit an Längskanten (52, 53) angeordneten, hinterschnittenen Längsnuten (84 - 87), ausgebildet ist, mittels eines Befestigungselements (80), wobei durch das Mittelteil (8) eine Längsebene (22) verläuft, wobei die freien Enden (18, 20) der Haltekrallen (4, 6) zur Längsebene (22) weisen und einen Abstand (24) aufweisen, welcher kleiner ist als eine Breite (59) einer Oberfläche (54) der Profilschiene (60) zwischen den genannten Längskanten (52, 53),
**dadurch gekennzeichnet, daß** zur Verbindung mit dem Profil (60) die Haltekrallen (4, 6) in Richtung zur Längsebene (22) C-artig abgewinkelt sind, und daß beim Festziehen des Befestigungselements (80) ein Abstand (55) zwischen den freien Enden (18, 20) und dem Mittelteil (8) vergrößerbar ist und die Haltekrallen (4, 6) in die Längsnuten (84 - 87) der Profilschiene (60) einpressbar sind.

2. Halteelement nach Anspruch 1, **dadurch gekennzeichnet, daß** die Haltekrallen (4, 6) einen zur Längsebene (22) gerichteten mittleren Steg (34, 36) aufweisen, welcher wenigstens eine Durchbrechung (38, 40) aufweist.

3. Halteelement nach Anspruch 1 oder 2, **dadurch gekennzeichnet, daß** das Mittelteil (8) im Übergangsbereich zu den Haltekrallen (4, 6) wenigstens eine Materialreduzierung oder Durchbrechung (44 - 47) aufweist, wobei bevorzugt zwei derartige Durchbrechungen zu beiden Seiten der Längsebene (22) angeordnet sind oder wobei insgesamt vier derartige Durchbrechungen (44-47) derart angeordnet sind, daß im Zentrum zwischen diesen vier Durchbrechungen das Verbindungselement (10,12) angeordnet ist.

4. Halteelement nach einem der Ansprüche 1 bis 3, **dadurch gekennzeichnet, daß** wenigstens zwei zu einer Innenseite (2), welche zwischen den Haltekrallen (4, 6) liegt, gerichtete oder abgewinkelte Zungen (48-51) vorgesehen sind, welche diametral zur Längsebene (22) angeordnet sind.

5. Halteelement nach Anspruch 4, **dadurch gekennzeichnet, daß** die Zungen (48-51) symmetrisch zur Längsebene (22) angeordnet sind, und/oder daß die freien Enden (56, 57) der Zungen (48-51) einen Abstand (58) zueinander aufweisen, welcher größer ist als der Abstand (58) zwischen den freien Enden (18, 20) der Haltekrallen (4, 6).

6. Halteelement nach Anspruch 4 oder 5, **dadurch gekennzeichnet, daß** die Zungen (48-51) an den Längskanten (52, 53) des Profils (60) zur Anlage bringbar sind und/oder zur Längsebene (22) in einem Winkel (43) erheblich kleiner als 90°, vorzugsweise im Bereich zwischen 30° und 60°, insbesondere zwischen 40° und 50°, angeordnet sind.

7. Halteelement nach einem der Ansprüche 1 bis 6, **dadurch gekennzeichnet, daß** auf der den Haltekrallen (4, 6) abgewandten Außenseite (9) des Mittelteils (8) wenigstens zwei bezüglich der Längsebene (22) diametral angeordnete Distanzelemente (68-71) vorgesehen sind und/oder daß die Dlstanzelemente (68-71) symmetrisch zur Längsebene (22) angeordnet sind und/oder daß die Distanzelemente (68-71) an Außenkanten von Durchbrechungen (44-47) des Mittelteils (8) vorgesehen sind.

8. Halteelement nach einem der Ansprüche 1 bis 7, **dadurch gekennzeichnet, daß** das Verbindungselement (10, 12) einteilig mit dem Halteelement ausgebildet ist und/oder daß das Verbindungselement (10, 12) eine ringsförmige Hülse (10) aufweist und/oder daß das Verbindungselement (10) im Zentrum des gesamten Halteelements angeordnet ist.

9. Halteelement nach einem der Ansprüche 1 bis 8, **dadurch gekennzeichnet, daß** mittels des als Bolzen oder Schraube ausgebildeten Befestigungskörpers (80) und des korrespondierenden Verbindungselements (10, 12) auf das Mittelteil (8) eine axiale Spannung derart aufgebbar ist, daß die Haltekrallen (4, 6) in die Längsnuten (84-87) des Profils (60) einpressbar sind.

10. Halteetement nach einem der Ansprüche 1 bis 9, **dadurch gekennzeichnet, daß** es aus Federstahl besteht.

## Claims

1. A holding element, comprising a middle part (8) and holding claws (4, 6) arranged on the latter, as well as a connection element (10, 12) for connecting a building component (78) to a section (60), which is formed as a sectional rail with undercut longitudinal slots (84 - 87) arranged on longitudinal edges (52, 53), by means of a fixing element (80), whereby a longitudinal plane (22) runs through the middle part (8), whereby the free ends (18, 20) of the holding claws (4, 6) point to the longitudinal plane (22) and have a spacing (24) which is smaller than a width (59) of a surface (54) of the sectional rail (60) between said longitudinal edges (52, 53),
**characterised in that**,
for the purpose of the connection to the section (60), the holding claws (4, 6) are bent in a C-shape in the direction of the longitudinal plane (22), and that, when the fixing element (80) is tightened, a spacing (55) between the free ends (18, 20) and the middle part (8) can be enlarged and the holding claws (4, 6) can be pressed into the longitudinal slots (84 - 87) of the sectional rail (60).

2. The holding element according to claim 1,
**characterised in that**
the holding claws (4, 6) have a middle web (34, 36) pointing towards the longitudinal plane (22), which web has at least one opening (38, 40).

3. The holding element according to claim 1 or 2,
**characterised in that**
the middle part (8) in the transition zone to the holding claws (4, 6) has at least one material reduction or opening (44 - 47), whereby preferably two such openings are arranged on both sides of the longitudinal plane (22) or whereby a total of four such openings (44 - 47) are arranged in such a way that the connection element (10, 12) is arranged in the centre between these four openings.

4. The holding element according to any one of claims 1 to 3,
**characterised in that**
there are provided at least two tongues (48-51) turned or bent towards an inside (2), which lies between the holding claws (4, 6), which tongues are arranged diametrically to the longitudinal plane (22).

5. The holding element according to claim 4,
**characterised in that**
the tongues (48 - 51) are arranged symmetrically to the longitudinal plane (22), and/or that the free ends (56, 57) of the tongues (48 - 51) have a spacing (58) with respect to one another which is greater than the spacing (58) between the free ends (18, 20) of the holding claws (4, 6).

6. The holding element according to claim 4 or 5,
**characterised in that**
the tongues (48 - 51) can be seated on the longitudinal edges (52, 53) of the section (60) and/or are arranged at an angle (43) to the longitudinal plane (22) considerably smaller than 90°, preferably in the range between 30° and 60°, especially between 40° and 50°.

7. The holding element according to any one of claims 1 to 6,
**characterised in that**
at least two distance elements (68-71) arranged diametrically with respect to the longitudinal plane (22) are provided on the outside (9) of the middle part (8) facing away from the holding claws (4, 6) and/or that the distance elements (68-71) are arranged symmetrically to the longitudinal plane (22) and/or that the distance elements (68 - 71) are provided on outer edges of openings (44 - 47) of the middle part (8).

8. The holding element according to any one of claims 1 to 7,
**characterised in that**
the connection element (10, 12) is formed in one piece with the holding element and/or that the connection element (10, 12) has an annular sleeve (10) and/or that the connection element (10) is arranged in the centre of the whole holding element.

9. The holding element according to any one of claims 1 to 8,
**characterised in that**,
by means of the fixing body (80) formed as a bolt or a screw and the corresponding connection element (10, 12), an axial tension can be imparted to the middle part (8) in such a way that the holding claws (4, 6) can be pressed into the longitudinal slots (84 - 87) of the section (60).

10. The holding element according to any one of claims 1 to 9,
**characterised in that**
it is made of spring steel.

## Revendications

1. Elément de maintien, comportant une pièce centrale (8) et des griffes de maintien (4, 6) disposées sur celle-ci, ainsi qu'un élément de liaison (10, 12) pour la liaison d'une pièce de construction (78) avec un profilé (60) qui est conçu comme un rail profilé avec des rainures longitudinales (84 - 87) découpées en arrière disposées sur les arêtes longitudinales (52, 53) au moyen d'un élément de fixation (80), la pièce centrale (8) étant traversée par un plan longitudinal (22), les extrémités dégagées (18, 20) des griffes de maintien (4, 6) étant orientées vers le plan longitudinal (22) et présentant un écartement (24) qui est inférieur à une largeur (59) d'une surface (54) du rail profilé (60) entre lesdites arêtes longitudinales (52, 53), **caractérisé en ce que**, pour la liaison avec le profilé (60), les griffes de maintien (4, 6) sont coudées en forme de C dans la direction du plan longitudinal (22) et que, lorsqu'on tire sur l'élément de fixation (80), un intervalle (55) entre les extrémités dégagées (18, 20) et la pièce centrale (8) peut être agrandi et que les griffes de maintien (4, 6) peuvent être enfoncées dans les rainures longitudinales (84 - 87) du rail profilé (60).

2. Elément de maintien selon la revendication 1, **caractérisé en ce que** les griffes de maintien (4, 6) présentent une traverse centrale (34, 36) alignée par rapport au plan longitudinal (22), qui présente au moins une percée (38, 40).

3. Elément de maintien selon la revendication 1 ou 2, **caractérisé en ce que** la pièce centrale (8) présente, dans la zone de transition vers les griffes de maintien (4, 6), au moins une restriction ou percée (44 - 47) de la matière, de préférence au moins deux percées de ce type étant disposées sur les deux côtés du plan longitudinal (22) ou au total quatre percées (44 - 47) de ce type étant disposées de manière à ce que l'élément de liaison (10, 12) soit disposé au centre entre ces quatre percées.

4. Elément de maintien selon une des revendications 1 à 3, **caractérisé en ce qu'**au moins deux languettes (48 - 51) droites ou coudées, qui sont disposées diamétralement par rapport au plan longitudinal (22), sont prévues sur une face interne (2) qui se trouve entre les griffes de maintien (4, 6).

5. Elément de maintien selon la revendication 4, **caractérisé en ce que** les languettes (48 - 51) sont disposées symétriquement par rapport au plan longitudinal (22) et/ou que les extrémités dégagées (56, 57) des languettes (48 - 51) présentent un intervalle (58) l'une par rapport à l'autre qui est supérieur à l'intervalle (58) entre les extrémités dégagées (18, 20) des griffes de maintien (4, 6).

6. Elément de maintien selon la revendication 4 ou 5, **caractérisé en ce que** les languettes (48 - 51) peuvent être mises en contact avec les arêtes longitudinales (52, 53) du profilé (60) et/ou sont disposées par rapport au plan longitudinal (22) dans un angle (43) nettement inférieur à 90°, de préférence dans une fourchette entre 30° et 60°, en particulier entre 40° et 50°.

7. Elément de maintien selon une des revendications 1 à 6, **caractérisé en ce que**, sur la face externe (9) de la pièce centrale (8) éloignée des griffes de maintien (4, 6), au moins deux éléments d'écartement (68 - 71) disposés diamétralement par rapport au plan longitudinal (22) sont prévus et/ou que les éléments d'écartement (68 - 71) sont disposés symétriquement par rapport au plan longitudinal (22) et/ou que les éléments d'écartement (68 - 71) sont prévus sur les arêtes externes des percées (44 - 47) de la pièce centrale (8).

8. Elément de maintien selon une des revendications 1 à 7, **caractérisé en ce que** l'élément de liaison (10, 12) forme une seule pièce avec l'élément de maintien et/ou que l'élément de liaison (10, 12) présente un manchon en forme de cercle (10) et/ou que l'élément de liaison (10) est disposé au centre de l'ensemble de l'élément de maintien.

9. Elément de maintien selon une des revendications 1 à 8, **caractérisé en ce que**, au moyen du corps de fixation (80) conçu sous forme d'un boulon ou d'une vis et de l'élément de liaison correspondant (10, 12), une tension axiale peut être exercée sur la pièce centrale (8) de manière à ce que les griffes de maintien (4, 6) puissent s'enfoncer dans les rainures longitudinales (84 - 87) du profilé (60).

10. Elément de maintien selon une des revendications 1 à 9, **caractérisé en ce qu'**il est fabriqué en acier à ressorts.
